# EUROPEAN PATENT APPLICATION

(11) **EP 4 636 788 A1**
(43) Date of publication of application: **22.10.2025**
(21) Application number: 24315200.6
(22) Date of filing: 19.04.2024
(51) Int. Cl.: H01B 17/54, H02G 5/10, H01H 9/52

(54) **ELECTRICALLY INSULATED HEAT AND MECHANICAL LINK, SYSTEM COMPRISING SUCH AN ELECTRICALLY INSULATED HEAT AND MECHANICAL LINK, AND A METHOD FOR MANUFACTURING SUCH AN ELECTRICALLY INSULATED HEAT AND MECHANICAL LINK**

(71) Applicant: Commissariat à l'Energie Atomique et aux Energies Alternatives, 75015 Paris (FR); SCHNEIDER ELECTRIC INDUSTRIES SAS, 92500 Rueil-Malmaison (FR)
(72) Inventor: Mariotto, Mathieu, 38054 Grenoble (FR); Baffie, Thierry, 38054 Grenoble (FR); Gruss, Jean-Antoine, 38054 Grenoble (FR); Kuentz, Emmanuel, 38640 Claix (FR); Summer, Raimund, 93049 Regensburg (DE); Triozon, André, 71000 Mâcon (FR)
(74) Representative: Brevalex

(57) **Abstract**

An electrically insulated heat and mechanical link (EIHML) for use in a fluid-filled environment of a high voltage equipment and for transferring heat from a hot source at a high electrical potential to a cold source at earth potential comprising an electrically insulating assembly and a thermal and mechanical management device, the electrically insulating assembly being attached to the thermal and mechanical management device. The electrically insulating assembly comprising a first insert configured for attachment to the hot source, a second insert, and a thermally conductive high voltage insulator coupling the first insert to the second insert. The thermal and mechanical management device being configured for attachment to the cold source at an opposite end to the second insert and having a stiffness in normal operational conditions less than that of the electrically insulating assembly.

## Description

### Technical Field

The invention concerns an electrically insulated heat and mechanical link for use in a fluid-filled environment of a high voltage equipment and for transferring heat from a hot source at a high electrical potential to a cold source at earth potential, a system comprising such an electrically insulated heat and mechanical link, and a method for manufacturing such an electrically insulated heat and mechanical link. In particular, the invention relates to thermal management of hotspots within Medium Voltage Switchgear and specifically circuit breakers.

The term "Medium Voltage" (also designated "MV") is commonly used for distribution systems with voltages above 1 kV and generally applied up to and including 52 kV. The connection of an electrical installation to a MV utility distribution network is always realized by means of a dedicated MV substation. One of the functions performed by such substations is the general protection of the installation itself. To achieve this protection function, switching devices for example circuit breakers, switches or contactors are employed. These devices enable the connection or disconnection of each electrical phase of the electrical load.

Such a system generally consists of an airtight tank where circuit breakers are configured on each electrical phase, coming into and leaving the tank. Nominal and unsteady operating conditions can lead to hot spots on the circuit breaker for example on a busbar within these circuit breakers. In order to allow continued operation without damage to the system, these hot spots must be cooled. Typically, this is achieved using a heat link between the hot spot and for example the tank casing.

This thermal management of such electrical switchgear is a real challenge given the continually increasing electric load requirements to supply increasingly more compact and efficient systems. Additionally, mechanical management of relative movements between the busbar and the casing due to thermal expansions as well as other operational vibrations coupled with thermal management is a first order concern. Further, it is a given that any such link must be an electrical insulator capable of resisting the voltages encountered in such systems without suffering from dielectric breakdown or succumbing to electrical arcing.

As used in this document, the lower case term "high voltage" does not have a specific technical meaning and encompasses Medium Voltage as defined above.

### State of the Art

EP3584897 discloses a device for cooling of a hotspot within a circuit breaker by channeling heat from an electrically live inner conductor to an earthed housing. A flexible conductor formed of a bundle of thin copper wires is attached at one end to the hotspot and at the other, through an electrically insulating spacer, to a block of metal having high thermal conductivity. This block is in turn attached to a rigid heat pipe containing a refrigerant. Displacement of the inner conductor relative to the housing is absorbed by the flexible conductor. The heat pipe extends through the casing to an external cooling source. This device suffers from a poor combination of mechanical to electrical properties as well as a propensity to arc across the electrically insulating spacer.

One goal of the present invention is to overcome at least part of the above mentioned drawbacks by providing an electrically insulated heat and mechanical link being constructed having both enhanced electrical resistance as well as mechanical robustness.

### Summary of the invention

In a first aspect, an electrically insulated heat and mechanical link, hereinafter EIHML, for use in a fluid-filled environment of a high voltage equipment and for transferring heat from a hot source at a high electrical potential to a cold source at earth potential is disclosed.

The EIHML comprises an electrically insulating assembly and a thermal and mechanical management device, the electrically insulating assembly being attached to the thermal and mechanical management device.

The electrically insulating assembly comprises a first insert configured for attachment to the hot source, a second insert at the electrical potential of the end of the thermal and mechanical management device to which the second insert is attached, and a thermally conductive high voltage insulator coupling the first insert to the second insert. The thermal and mechanical management device is configured for attachment to the cold source at an opposite end to the second insert and has a stiffness in normal operational conditions less than that of the electrically insulating assembly.

The thermally conductive high voltage insulator may comprise a thermally conductive electrically insulating spacer and a high voltage insulator encapsulating at least the spacer.

Further, the high voltage insulator may encapsulate a part of the first and/or second insert.

Yet further, the high voltage insulator may encapsulate a part of the thermal and mechanical management device.

The spacer and the high voltage insulator may be separate parts assembled to form the thermally conductive high voltage insulator or may be integral parts forming the thermally conductive high voltage insulator. In each case, the thermal properties of the spacer are maintained.

Further, the high voltage insulator may comprise at least one screening element configured to diminish an electric field at the perimeter of an interface between the thermally conductive high voltage insulator and the first and/or second inert.

Still further, the thermally conductive high voltage insulator may comprise a material selected from a group comprising Boron Nitride (BN), Silicon Nitride (Si₃N₄), Aluminium Oxide (Al₂O₃), Silicon Carbide (SiC), Beryllium oxide (BeO) and Aluminium Nitride (AIN). Of these materials, AIN is preferred.

At least one of the first insert and/or the second insert may comprise a metal, specifically a metal having a thermal conductivity under normal operational conditions of between 100 W/mK and 1000 W/mK and preferably between 200 W/mK and 500 W/mK. That metal may comprise copper or an alloy of copper.

Further, the thermally conductive high voltage insulator may comprise a first copper foil and a second copper foil attached to either end of a thermally conductive electrically insulating core so as to provide an interface with the first and second inserts.

The thermal and mechanical management device may comprise a heat pipe and most beneficially, a pulsated heat pipe.

In a second aspect, a system is disclosed comprising a sealed casing defining a cavity, a switching circuitry having at least one hot source in need of cooling, and an electrically insulated heat and mechanical link according to the first aspect.

The switching circuitry is housed within the cavity. The casing has at least one wall comprising at least one cold source. The electrically insulated heat and mechanical link couples the at least one hot source to the at least one cold source.

Further, the switching circuitry may be a high voltage switching circuitry.

For example, the sealed casing may define a fluid-filled cavity.

Still further, the switching circuitry may be a gas insulated electrical switching gear, preferably a circuit breaker.

In a third aspect, a method for manufacturing an electrically insulated heat and mechanical link is disclosed. The method comprises providing a first insert, providing a second insert, and providing a thermally conductive high voltage insulator. Subsequently, the method comprises attaching, in series, the second insert, the thermally conductive high voltage insulator and the first insert, so as to form an electrically insulating assembly. The method then comprises attaching the second insert of the electrically insulating assembly to an end of a thermal and mechanical management device.

Further, the method comprising the step of providing the thermally conductive high voltage insulator may comprise a step of providing a thermally conductive electrically insulating spacer and a high voltage insulator encapsulating at least the spacer.

Still further, the step of attaching in series may comprise a step of soldering or brazing or gluing, copper foils to each end of the thermally conductive high voltage insulator so as to form the electrically insulating assembly.

The step of attaching in series of at least one of the first insert and the second insert to the thermally conductive high voltage insulator may comprise the use of transient liquid phase bonding.

### Brief description of the drawings

The above and other aspects, features and other advantages of the present disclosure will be more clearly understood from the following detailed description taken in conjunction with the accompanying drawings, in which:
Fig. 1 shows a system having an electrically insulating heat and mechanical link.
Fig. 2 shows an expanded view of a thermally conductive electrically insulating spacer.

### Detailed description

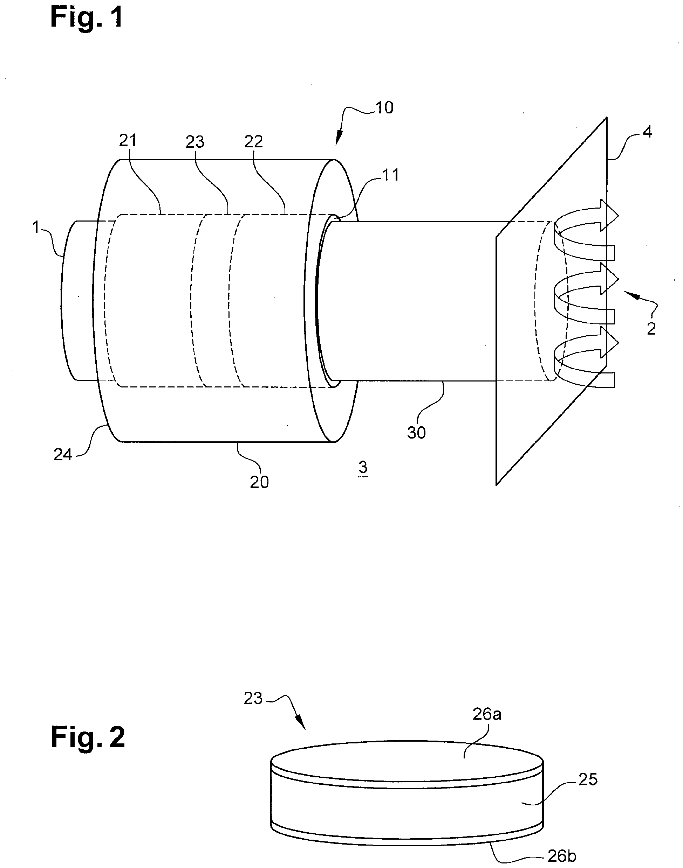

Fig. 1 is a schematic depiction of an electrically insulated heat and mechanical link, hereinafter EIHML, for use in a fluid-filled environment of a high voltage equipment. As depicted, the EIHML 10 is positioned between and attached to a hot source 1 and a cold source 2.

In practice, and in keeping with the introduction above, the hot source may be a hotspot on a busbar in a switching circuit and the cold source may be a casing of the switching circuitry.

The EIHML 10 comprises two principal components namely an electrically insulating assembly 20 and a thermal and mechanical management device 30. These two components are attached to one another at an interface 11. Heat passing from the hot source to the cold source thus flows from the hot source 1 to and through the electrically insulating assembly 20, across the interface 11, through the thermal and mechanical management device 30 and to the cold source 2 where it is dissipated.

The electrically insulating assembly 20 is both electrically insulating, including susceptibility to arcing, and a good thermal conductor. The thermal and mechanical management device 30 is both a good thermal conductor and is able to accommodate movement between its ends. When placed in series as described above, the resulting EIHML exhibits all three properties.

Considering now the electrically insulating assembly. The electrically insulating assembly comprises a first insert 21 configured for attachment to the hot source 1 and further comprises a second insert 22. A thermally conductive high voltage insulator is positioned to couple the first insert 21 with the second insert 22. As depicted in fig.1, the thermally conductive high voltage insulator comprises a thermally conductive electrically insulating spacer 23 sandwiched between the first insert 21 and the second insert 22 so as to provide an electrically insulating and thermally conductive coupling there between. The second insert 22 is attached to the thermal and mechanical management device at the interface 11. With this arrangement, where an electrically potential exists between the hot source 1 and the cold source 2, the second insert 22 is at the electrical potential of the thermal and mechanical management device.

The thermal and mechanical management device is configured for attachment to the cold source 2 at an opposite end to the second insert 22. As referenced above, the thermal and mechanical management device 30 has a stiffness in normal operational conditions less than that of the electrically insulating assembly 20.

Considering further the electrically insulating assembly 20, the thermally conductive high voltage insulator may also comprise a high voltage insulator 24 encapsulating at least the thermally conductive electrically insulating spacer 23. As depicted in fig. 1, the high voltage insulator encapsulates the first insert 21, the second insert 22 and the thermally conductive electrically insulating spacer 23. Alternatively, the high voltage insulator 24 may encapsulate a part of the first and/or second insert. Further, the high voltage insulator may encapsulate a part of the thermal and mechanical management device 30. Suitable for the encapsulating material is an epoxy resin.

Regarding assembly, the spacer 23 and the high voltage insulator 24 may be separate parts assembled to form the thermally conductive high voltage insulator. Alternatively, the spacer 23 and the high voltage insulator may be integral parts forming the thermally conductive high voltage insulator.

Further, the high voltage insulator may comprise at least one screening element (not shown) configured to diminish an electric field at the perimeter of an interface between the thermally conductive high voltage insulator and the first and/or second inert.

The thermally conductive high voltage insulator may be chosen from a group of materials comprising Boron Nitride (BN), Silicon Nitride (Si₃N₄), Aluminium Oxide (Al₂O₃), Silicon Carbide (SiC), Beryllium oxide (BeO) and Aluminium Nitride (AIN). Of these materials, AIN is the preferred material for its outstanding dielectric and heat conducting properties.

The combination of an electrical insulating material, a suitable creepage distance, a screening to smooth the dielectric field and a suitable insulating encapsulant will prohibit arcing in this medium voltage application.

At least one of the first insert and/or the second insert is composed of a metal having a high thermal conductivity. By high thermal conductivity is to be understood a thermal conductivity under normal operational conditions of between 100 W/mK and 1000 W/mK and preferably between 200 W/mK and 500 W/mK. A suitably material satisfying these conditions is copper or an alloy of copper.

Fig. 2 shows further detail of the thermally conductive high voltage insulator where this takes the form of the thermally conductive electrically insulating spacer 23 shown in fig. 1. The thermally conductive electrically insulating spacer 23 consists of a thermally conductive electrically insulating core 25 sandwiched between a first copper-based foil 26a and a second copper-based foil 26b. On assembly into the electrically insulating assembly 20, the first copper-based foil 26a and the second copper-based foil 26b are attached to the first insert 21 and the second inserts 22 respectively.

As describe above, the thermal and mechanical management device 30 is configured to offer high thermal conductivity in conjunction with mechanical compliance. Suitably, thermal and mechanical management device 30 incorporates a heat pipe. Such a heat pipe may take the form of a loop heat pipe although a conventional heat pipe such as a thermosiphon, a grooved wick type heat pipe or a porous heat pipe may also be used. A Heat pipe acts to transfer heat from a hot evaporator part to a cold condenser part.

More suitably, the heat pipe is a pulsated heat pipe. Such heat pipes have multiple advantages over conventional heat pipes, most notably, reliability, the ability to conduct high heat flux densities and lower sensitivity to orientation with respect to gravity. As compared with porous heat pipes, greater mechanical flexibility is offered.

More specifically, the pulsated heat pipe may take the form of an S-shape configured to reduce stresses, minimize fatigue and enhance the life of the thermal and mechanical management device. This is the subject matter of a further application by the same applicants entitled "Thermal and Mechanical Management Device and system comprising such a device" filed on the same day as this application. Piping of the evaporator part of the pulsating heat pipe may be incorporated into the second insert 22.

There will now be described, and depicted in fig. 1, a system incorporating the EIHML described above. The system comprises a sealed casing such as the casing of high voltage or of medium voltage switching gear. The casing defines a cavity 3 within which is housed switching circuitry having at least one hot source 1 in need of cooling. The casing includes at least one wall 4 comprising at least one cold source 2. An EIHML as described in the paragraphs above couples the at least one hot source 1 to the at least one cold source 2 thus providing cooling to the hotspot by dissipating heat therefrom to the cold source.

In order to provide further enhanced electrical properties to the system, the sealed casing defining the cavity 3 may be fluid filled. Accordingly, the switching circuitry may be a gas insulated electrical switching gear, preferably a circuit breaker.

There will now be described a method for manufacturing an electrically insulated heat and mechanical link such as the EIHML described above. The manufacture comprises the steps of:
i) providing a first insert 21;
ii) providing a second insert 22;
iii) providing a thermally conductive high voltage insulator;
iv) attaching in series so as to form an electrically insulating assembly 20:
   a) the second insert 22,
   b) the thermally conductive high voltage insulator, and
   c) the first insert 21; and
v) attaching the second insert 22 of the electrically insulating assembly 20 to an end of a thermal and mechanical management device 30.

At step iii) the thermally conductive high voltage insulator may comprise a thermally conductive electrically insulating spacer 23 and a high voltage insulator 24 encapsulating at least the spacer 23.

In orderto improve compatibility with the first and second inserts, copper foils 26a, 26b may be attached to either side of the thermally conductive high voltage insulator by soldering or brazing so as to form the electrically insulating assembly.

For step iv) of attaching in series of at least one of the first insert and the second insert to the thermally conductive high voltage insulator this may be accomplished by gluing, brazing, diffusion bonding by way of hot isostatic pressing or uniaxial compression or by transient liquid phase bonding (TLPB). Of these methods, TLPB is preferred due to low toxicity as compared to lead based solders as well as lower thermal stressed exerted on the thermally conductive high voltage insulator during cooling.

Although the EIHML is described above in the context of the thermal management of electrical switching gear, other applications, such as for example to provide cooling in the within the drive chains of electric automobiles, could also be contemplated.

## Claims

1. An electrically insulated heat and mechanical link (10) for use in a fluid-filled environment of a high voltage equipment and for transferring heat from a hot source (1) at a high electrical potential to a cold source (2) at earth potential comprising:
an electrically insulating assembly (20), and
a thermal and mechanical management device (30);
the electrically insulating assembly (20) being attached to the thermal and mechanical management device (30);
the electrically insulating assembly (20) comprising:
a first insert (21) configured for attachment to the hot source (1),
a second insert (22) at the electrical potential of the end of the thermal and mechanical management device (30) to which the second insert is attached,
a thermally conductive high voltage insulator coupling the first insert (21) to the second insert (22),
wherein the thermal and mechanical management device (30) is configured for attachment to the cold source (2) at an opposite end to the second insert and having a stiffness in normal operational conditions less than that of the electrically insulating assembly.

2. The electrically insulated heat and mechanical link (10) according to claim 1 wherein the thermally conductive high voltage insulator comprises a thermally conductive electrically insulating spacer (23) and a high voltage insulator (24) encapsulating at least the spacer (23) and wherein advantageously, the high voltage insulator encapsulates part of the first and/or second insert (21, 22).

3. The electrically insulated heat and mechanical link (10) according to claim 2 wherein the spacer (23) and the high voltage insulator (24) are separate parts assembled to form the thermally conductive high voltage insulator.

4. The electrically insulated heat and mechanical link (10) according to claim 2 wherein the spacer (23) and the high voltage insulator (24) are integral parts forming the thermally conductive high voltage insulator.

5. The electrically insulated heat and mechanical link according to any one of claims 2 to 4 wherein the high voltage insulator comprises at least one screening element configured to diminish an electric field at the perimeter of an interface between the thermally conductive high voltage insulator and the first and/or second inert.

6. The electrically insulated heat and mechanical link according to any one of claims 1 to 5, wherein the thermally conductive high voltage insulator comprises a material selected from a group comprising Boron Nitride (BN), Silicon Nitride (Si₃N₄), Aluminium Oxide (Al₂O₃), Silicon Carbide (SiC), Beryllium oxide (BeO) and Aluminium Nitride (AIN).

7. The electrically insulated heat and mechanical link according to any one of claims 1 to 6, wherein at least one of the first insert and/or the second insert (21, 22) comprises a metal;
wherein advantageously, the metal has a thermal conductivity under normal operational conditions of between 100 W/mK and 1000 W/mK and preferably between 200 W/mK and 500 W/mK; and
wherein advantageously, the metal comprises copper or an alloy of copper.

8. The electrically insulated heat and mechanical link according to any of claim 1 to 7 wherein the thermally conductive high voltage insulator comprises:
a thermally conductive electrically insulating core (25),
a first copper-based foil (26a),
a second copper-based foil (26b),
wherein the first copper foil and the second copper foil (26a, 26b) are attached to either end of the thermally conductive electrically insulating core where it is attached to the first and second inserts (21, 22).

9. The electrically insulated heat and mechanical link (10) according to any of claims 1 to 8 wherein the thermal and mechanical management device comprises a pulsated heat pipe.

10. A system comprising:
a sealed casing defining a cavity (3),
a switching circuitry having at least one hot source (1) in need of cooling,
an electrically insulated heat and mechanical link (10) according to any of claims 1 to 9;
the switching circuitry housed within the cavity;
the casing having at least one wall (4) comprising at least one cold source (2);
the electrically insulated heat and mechanical link (10) coupling the at least one hot source (1) to the at least one cold source (2).

11. The system according to claim 10 wherein the switching circuitry is a high voltage switching circuitry.

12. The system according to either of claims 10 or 11 wherein the sealed casing defines a fluid-filled cavity.

13. The system according to any of claims 10 to 12 wherein the switching circuitry is a gas insulated electrical switching gear, preferably a circuit breaker.

14. A method for manufacturing an electrically insulated heat and mechanical link comprising steps of:
i) providing a first insert (21);
ii) providing a second insert (22);
iii) providing a thermally conductive high voltage insulator;
iv) attaching in series so as to form an electrically insulating assembly (20):
the second insert (22),
the thermally conductive high voltage insulator, and
the first insert (21); and
v) attaching the second insert of the electrically insulating assembly (20) to an end of a thermal and mechanical management device (30).

15. The method according to claim 14 in which step iv) of attaching in series comprises a step of soldering or brazing or gluing copper foils to each end of the thermally conductive high voltage insulator so as to form the electrically insulating assembly.
